(19) Europäisches Patentamt
European Patent Office
Office européen des brevets

(11) **EP 4 760 279 A1**

(12) **EUROPEAN PATENT APPLICATION**

(43) Date of publication:
**17.06.2026 Bulletin 2026/25**

(21) Application number: **24219948.7**

(22) Date of filing: **13.12.2024**

(51) International Patent Classification (IPC):
**G01R 29/08** (2006.01)

(52) Cooperative Patent Classification (CPC):
**G06N 10/00; G06N 10/40; H04L 9/0852;**
**B82Y 15/00; G01R 29/08**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Sørensen, Knud Haugaard**
**2800 Kongens Lyngby (DK)**

(72) Inventor: **Sørensen, Knud Haugaard**
**2800 Kongens Lyngby (DK)**

(74) Representative: **Budde Schou A/S**
**Dronningens Tvaergade 30**
**1302 Copenhagen K (DK)**

(54) **INSTRUMENT FOR OBSERVING QUANTUM SYSTEMS**

(57) A method and detection system for detecting gauge waves from a quantum system. The method comprising generating a non-zero gradient in the time-component of the electric field, such that gauge waves are converted to electromagnetic waves and detecting transversal electromagnetic waves originating from the conversion. The non-zero gradient in the time component may be generated by a magnetic vortex. The magnetic vortex may be generated by a first magnetic field generator and a second magnetic field generator generating fields being oppositely directed along a magnetic axis and being subjected to an electric pulse applied perpendicularly to the magnetic field.

Fig. 2

**Description**

## FIELD OF INVENTION

The present invention relates to quantum sensing and in particular to converting the gauge-waves that give rise to the quantum effects into electromagnetic waves such they can be easily detected e.g., by filming with a camera.

## BACKGROUND OF THE INVENTION

Quantum systems are present everywhere. In recent years efforts have been made to understand and utilize quantum effects in various aspects of society. Currently many advances are being made in the field of quantum computing, cryptography and sensing using quantum effects to determine small changes in the surrounding environment.

However, to be able to use the quantum effects it is necessary to understand them, which in turn requires being able to measure and observe quantum effects. However, detection of such effects are difficult to achieve. Various highly specialized experiments have through time been set up to allow the detection of particular quantum behaviours. A prerequisite of all such experiments is careful control of the system and planning of which effects to induce and detect. Such experiences also typically require significant post-processing to derive the results. Therefore the detection of any quantum effects is a cumbersome and time-consuming task and the measurements typically requires planning of schemes for inducing and controlling effects often limiting the experiments to fundamental research and verification of effects.

Hence, there is a need for methods and systems allowing the continuous and even real-time study of quantum effects arising from any quantum system.

It has been noticed that the Schrödinger and Dirac equations can be interpreted as average energy relations [1, 2] which indicates that the described quantum systems is in a continuous and balanced energy exchange with the quantum vacuum. Over time the energy flowing in is equal to the energy flowing out. If such energy could be monitored the detection of quantum effects may be made possible. The functionality of the gauge-condition and the gauge-function has also been studied in gauge-theories. In quantum electrodynamics (QED) the gauge-function is the factor that binds electrodynamics and the quantum formulation together. But so far the common perspective has been that the gauge-condition and the gauge-function are redundant degrees of freedom and the focus have been on formulating theories that is invariant with respect to changes in the gauge-function.

## SUMMARY OF THE INVENTION

Numerous objects and advantages, which will be evident from the description of the present invention, are according to a first aspect of the present invention obtained by:

A method for detecting gauge-waves from a quantum system, the method comprising:

- generating a non-zero gradient in the time component of the electric field, such that gauge waves are converted to electromagnetic waves,

- detecting transversal electromagnetic waves from the conversion.

By a quantum system is understood all systems containing charged particles and described by quantum physics.

By quantum effects is understood the effects described by quantum physics but not classical physics.

By detection of quantum effects is understood the recording of the transversal electromagnetic waves from the converted gauge waves and the correlation of those waves with the quantum effects. The recording may be carried out over the duration of the application of the method.

A gauge-function is well-known in both electrodynamics and quantum mechanics as a function having a real value for every point in space-time.

To understand how energy flows in and out of the quantum system and how the invention may detect this energy, a deep look into extended electrodynamics is provided.

The starting point is the electric charge and current density $\rho(t, \vec{r}), \vec{j}(t, \vec{r})$ in Gauss units. The electric potential and vector potential can be defines as

$$\phi(t, \vec{r}) = \int_V \frac{\rho(t - |\vec{r}_s - \vec{r}|/c, \vec{r}_s)}{|\vec{r}_s - \vec{r}|} d\vec{r}_s$$

$$\vec{A}(t, \vec{r}) = \frac{1}{c} \int_V \frac{\vec{j}(t - |\vec{r}_s - \vec{r}|/c, \vec{r}_s)}{|\vec{r}_s - \vec{r}|} d\vec{r}_s \qquad (1)$$

Then the electric and magnetic fields can be expresses as:

$$\vec{E} = -\vec{\nabla}\phi - \frac{1}{c}\frac{\partial \vec{A}}{\partial t}$$

$$\vec{B} = \vec{\nabla} \times \vec{A} \qquad (2)$$

The wave operator may be applied under the integral of the potentials (1) leading to [3]:

$$\left(\frac{1}{c^2}\frac{\partial^2}{\partial t^2} - \vec{\nabla}^2\right)\phi = \left(\frac{1}{c^2}\frac{\partial^2}{\partial t^2} - \vec{\nabla}^2\right)\int_V \frac{\rho(t - |\vec{r}_s - \vec{r}|/c, \vec{r}_s)}{|\vec{r}_s - \vec{r}|} d\vec{r}_s = 4\pi\rho$$

$$\left(\frac{1}{c^2}\frac{\partial^2}{\partial t^2} - \vec{\nabla}^2\right)\vec{A} = \left(\frac{1}{c^2}\frac{\partial^2}{\partial t^2} - \vec{\nabla}^2\right)\frac{1}{c}\int_V \frac{\vec{j}(t - |\vec{r}_s - \vec{r}|/c, \vec{r}_s)}{|\vec{r}_s - \vec{r}|} d\vec{r}_s = \frac{4\pi}{c}\vec{j} \qquad (3)$$

The wave operator may also be rewritten using the fields (2) and the relation $\vec{\nabla}^2\vec{V} = \vec{\nabla}(\vec{\nabla} \cdot \vec{V}) - \vec{\nabla} \times (\vec{\nabla} \times \vec{V})$:

$$\left(\frac{1}{c^2}\frac{\partial^2}{\partial t^2} - \vec{\nabla}^2\right)\phi = \frac{1}{c^2}\frac{\partial^2 \phi}{\partial t^2} - \vec{\nabla}\cdot\left(-\vec{E} - \frac{1}{c}\frac{\partial \vec{A}}{\partial t}\right)$$

$$= \vec{\nabla}\cdot\vec{E} + \frac{1}{c}\frac{\partial}{\partial t}\left(\frac{1}{c}\frac{\partial \phi}{\partial t} + \vec{\nabla}\cdot\vec{A}\right) \qquad (4)$$

$$\left(\frac{1}{c^2}\frac{\partial^2}{\partial t^2} - \vec{\nabla}^2\right)\vec{A} = \frac{1}{c}\frac{\partial}{\partial t}\left(-\vec{\nabla}\phi - \vec{E}\right) - \vec{\nabla}(\vec{\nabla}\cdot\vec{A}) + \vec{\nabla}\times\vec{B}$$

$$= \vec{\nabla}\times\vec{B} - \frac{1}{c}\frac{\partial \vec{E}}{\partial t} - \vec{\nabla}\left(\frac{1}{c}\frac{\partial \phi}{\partial t} + \vec{\nabla}\cdot\vec{A}\right)$$

Notice that the expressions above contain a term having the form $\frac{1}{c}\frac{\partial \phi}{\partial t} + \vec{\nabla}\cdot\vec{A}$. This part contains an extra degree of freedom which is traditionally removed by choosing gauge condition. An example of such a gauge condition is the Lorenz gauge, where the term is removed by setting it to zero: $\frac{1}{c}\frac{\partial \phi}{\partial t} + \vec{\nabla}\cdot\vec{A} = 0$.

Applying knowledge from the field of quaternionic electrodynamics [4] and using the extra degree of freedom, a time-like component to the field may be defined as

$$E_t = \frac{1}{c}\frac{\partial \phi}{\partial t} + \vec{\nabla}\cdot\vec{A} \qquad (5)$$

Now by substituting in the time-like component (5) and collecting the right side of (3) and (4) leading to the first two of the extended Maxwell's equations.

$$\vec{\nabla} \cdot \vec{E} + \frac{1}{c}\frac{\partial E_t}{\partial t} = 4\pi\rho$$

$$\vec{\nabla} \times \vec{B} - \frac{1}{c}\frac{\partial \vec{E}}{\partial t} - \vec{\nabla}E_t = \frac{4\pi}{c}\vec{j} \tag{6}$$

And by taking $\vec{\nabla} \cdot \vec{B}$ and $\vec{\nabla} \times \vec{E}$ on the field definitions (2) the last two Maxwell's equations are obtained:

$$\vec{\nabla} \cdot \vec{B} = 0$$

$$\vec{\nabla} \times \vec{E} + \frac{1}{c}\frac{\partial \vec{B}}{\partial t} = 0 \tag{7}$$

The wave equations for the fields can now be derived by writing the wave expression and inserting (6) and (7), again using the relation $\vec{\nabla}^2 V = \vec{\nabla}(\vec{\nabla}\cdot\vec{V}) - \vec{\nabla} \times (\vec{\nabla} \times \vec{V})$ on the vector fields, resulting in:

$$\frac{1}{c^2}\frac{\partial^2 \vec{E}}{\partial t^2} - \vec{\nabla}(\vec{\nabla} \cdot \vec{E}) + \vec{\nabla} \times \vec{\nabla} \times \vec{E} = 4\pi\left(-\vec{\nabla}\rho - \frac{1}{c^2}\frac{\partial \vec{j}}{\partial t}\right) \tag{8}$$

$$\frac{1}{c^2}\frac{\partial^2 \vec{B}}{\partial t^2} + \vec{\nabla} \times \vec{\nabla} \times \vec{B} = \frac{4\pi}{c}\vec{\nabla} \times \vec{j}$$

$$\frac{1}{c^2}\frac{\partial^2 E_t}{\partial t^2} - \vec{\nabla}^2 E_t = \frac{4\pi}{c}\left(\frac{\partial \rho}{\partial t} + \vec{\nabla} \cdot \vec{j}\right) \tag{9}$$

Equation (9) with the wave terms in the time components on the left side and the charge continue equations on the right side, reveals that charge can be understood as a spherical standing wave in the electric time components.

A gauge-function $S(t,\vec{r})$ is needed to understand how energy flows in and out of a quantum-system. As mentioned a gauge-function is a function which has a real value for every point in space-time. Gauge-functions are well known in both electrodynamics and quantum mechanics. In electrodynamics it expresses the freedom of choosing the zero-point for the electric potential and the freedom to add a rotation-free vector function to the vector-potential $\vec{A}$ and in quantum mechanic the gauge-function adds a phase-shift to the wave function $\psi$.

When looking only on the contribution to the electric potential $\phi$ and vector potential $\vec{A}$ from the gauge-function $S(t,\vec{r})$, one can write:

$$\phi = -\frac{1}{c}\frac{\partial S}{\partial t}$$

$$\vec{A} = \vec{\nabla}S \tag{10}$$

When inserted in the field expressions, the contribution of the gauge-functions to the electric field and the magnetic field is found to be zero.

$$\vec{E} = -\vec{\nabla}\phi - \frac{1}{c}\frac{\partial \vec{A}}{\partial t} = \vec{\nabla}\frac{1}{c}\frac{\partial S}{\partial t} - \frac{1}{c}\frac{\partial \vec{\nabla}S}{\partial t} = 0$$

$$\vec{B} = \vec{\nabla} \times \vec{A} = \vec{\nabla} \times \vec{\nabla}S = 0 \tag{11}$$

Inserting the gauge-functions in the time component expression leads to:

$$E_t = \frac{1}{c}\frac{\partial \phi}{\partial t} + \vec{\nabla} \cdot \vec{A} = -\frac{1}{c^2}\frac{\partial^2 S}{\partial t^2} + \vec{\nabla}^2 S \tag{12}$$

Resulting in the wave equations:

$$E_t = -\frac{1}{c^2}\frac{\partial^2 S}{\partial t^2} + \vec{\nabla}^2 S \qquad (13)$$

The wave in S will be referred to as the gauge-wave. The above inhomogeneous wave equation (13) indicates that the electric time components works as a source or sink for the gauge-wave.

When particles are modelled as standing waves in $E_t$ [5] the balanced absorption and transmission of gauge-waves explain why Schrödinger and Dirac equations are average energy relations. It also indicate that most quantum effects are correlated with gauge-waves.

Converting gauge-waves to transversal electrodynamic waves makes the detection of the gauge-waves possible.

Consider a point in space where charge density and current density is zero, and take the gradient of the first equation in (6) this leads to:

$$\vec{\nabla}(\vec{\nabla} \cdot \vec{E}) = -\frac{1}{c}\frac{\partial \vec{\nabla} E_t}{\partial t} \qquad (14)$$

Substituting that into the first equation of (8) leads to:

$$\frac{1}{c^2}\frac{\partial^2 \vec{E}}{\partial t^2} + \vec{\nabla} \times \vec{\nabla} \times \vec{E} = -\frac{1}{c}\frac{\partial \vec{\nabla} E_t}{\partial t} \qquad (15)$$

Rewriting the $\vec{\nabla} \times \vec{\nabla} \times \vec{B}$ term in the seconded equation from (8) using (6) leads to:

$$\frac{1}{c^2}\frac{\partial^2 \vec{B}}{\partial t^2} + \frac{1}{c}\frac{\partial \vec{\nabla} \times \vec{E}}{\partial t} = 0 \qquad (16)$$

Together equation (15) and (16) describe a transverse electromagnetic wave with a source term or more precisely how a time variation in the gradient of the electric time component can absorb or emit transverse electromagnetic waves.

By the time component of the electric field is understood $E_t$ as defined in equation (5).

By the generation of a non-zero gradient in the time component is understood a generation of a change in the time component of the electric field $E_t$ between points in space.

By gauge waves is understood solutions to the wave equation in the gauge function $S$:

$$0 = -\frac{1}{c^2}\frac{\partial^2 S}{\partial t^2} + \vec{\nabla}^2 S \qquad (17)$$

By generating a non-zero gradient for the time component for the electric field ($\vec{\nabla}$-$E_t$), the invention facilitates the conversion of gauge waves to transversal electromagnetic waves, i.e. the conversion of gauge waves into light which may be detected with conventional equipment such as cameras or photo-detectors.

A benefit of being capable of detecting the gauge waves as transversal electromagnetic waves is to leverage all the technology developed for detecting transversal electromagnetic waves. For example cameras are highly developed technology which may be used for real-time detection. Similarly photo-detectors may be used for single photon detection of electromagnetic waves. This makes the detection of quantum effects more easily accessible as conventional methods may be used for the detection step once the gauge wave has been converted.

In other words, the basic types of things that the invention improves is the ability to study quantum effects and quantum systems.

According to a further embodiment of the first aspect of the invention, the non-zero gradient in the time component is generated by a magnetic vortex.

By a magnetic vortex is understood a circular magnetic field. Such a circular magnetic field may be similar to what is generated around a wire conducting a constant electric current, but in the case of the magnetic vortex the magnetic field is generated away from such a wire, such that the wire need not occupy the center point of the magnetic vortex.

One way to generate a non-zero gradient in the time component for the electric field $(\vec{\nabla} E_t)$ is to create a magnetic vortex, which will use the divergence on the vector potential part $(\vec{\nabla} \cdot \vec{A})$ of time component for the electric field $(E_t)$ as seen in (5). An alternative option is to generate a non-zero gradient in the time component of the electric field $(\vec{\nabla}_t)$ using the time differential of the electric potential ( $\frac{1}{c}\frac{\partial \phi}{\partial t}$ ) part of the time component for the electric field $(E_t)$ or using a combination of the two parts. This might be archived by applying a time-varying electric potential ( $\frac{1}{c}\frac{\partial \phi}{\partial t}$ ) over a piece of translucent material. Here translucency to UV light is a advantage.

A benefit of creating the non-zero gradient in the time component of the electric field $(\vec{\nabla} E_t)$ using a magnetic vortex is that it allows the manipulation of electric and magnetic fields using conventional modern technology.

According to a further embodiment of the first aspect of the invention, the magnetic vortex is created by subjecting a center point to a first magnetic field and a second magnetic field, the first magnetic field and the second magnetic field being aligned in opposite directions, and applying an electric pulse perpendicularly to the magnetic fields.

By the center point is understood the point where the opposing magnetic field cancel each other out. Hence, the center point is the radial center of the magnetic vortex forming a circular magnetic field.

By the first magnetic field and the second magnetic field being aligned in opposite directions is understood that similar magnetic poles are aligned against each other, either north against north or south against south. It will be understood to the person skilled in the art, that the first magnetic field and the second magnetic field do not need to be perfectly aligned against each other as long as they are sufficiently aligned to create a magnetic vortex. The fields being aligned in opposite directions has the pole of the same sign of the first magnetic field and the second magnetic field to be closer to each other than the poles of opposite sign.

By applying an electric pulse is understood changing the electric potential between the two electrodes.

By the electric pulse being applied perpendicularly to the magnetic field is understood that the electrodes is parallel to the magnetic axis and the potential over the electrodes is changed, resulting in a changing electric field perpendicularly to the magnetic axis.

According to a further embodiment of the first aspect of the invention, the first magnetic field and the second magnetic field are of the same magnitude.

A benefit of applying magnetic fields of the same magnitude is that the center point of the magnetic vortex will be right between the magnets.

For other variants, the magnetic fields or the oppositely directed field components of the magnetic filed may be of different magnitude in which case the center point may be shifted between the magnetic sources. Such a shift may be used to ensure that the magnetic vortex is aligned relative to the quantum system to obtain the target non-zero gradient. This may e.g. be relevant to accommodate spatial restrictions of the detection system and/or the investigated quantum system.

According to a further embodiment of the first aspect of the invention, the first magnetic field and the second magnetic field each provide a magnetic field strength of at least 8 T at the site of the center point.

A way to create a magnetic vortex is to use two strong magnets, having a strength of at least 8T, with fields aligned against each other to set up a magnetic stress field and applying an electric pulse at a perpendicular angle to the alignment of the magnets. Such an arrangement of magnets and an electric field pulse will set up a rotating magnetic field and a divergence in the electric time component, according to (6).

According to a further embodiment of the first aspect of the invention, the electric pulse rises from 0 V to a constant potential.

The electric pulse should be characterized by the shape of a potential rising from zero up to a constant potential. It will be apparent to the person skilled in the art that various pulse shapes fulfilling these criteria may be used to create and maintain the magnetic vortex and the optimum values will be dependent on the use case, e.g. the magnitude of the applied magnetic filed, the temperature and the sensitivity of the detection device. The initial rise of the potential is helping to create the to create the magnetic vortex. The constant potential held after the rise of the electric pulse contributes to aligning the vortex and keeping it in place after the vortex is created.

According to a further embodiment of the first aspect of the invention, the detection system is cooled to a temperature of 0.5 K or below.

The cooling of the detection system may in some preferred variants be facilitated by a cryostat.

The energy density of the gauge waves depends on the temperature. The higher the temperature the higher the energy density of the photons which in turn increases the risk of over-exposure of the detection equipment such as a camera used for the recording of the transversal electromagnetic waves originating from the converted gauge waves. Hence, cooling the quantum system to 0.5 K or below slows the quantum system and decreases the signal per time thereby decreasing the risk of overexposure of the camera or detectors. The low temperature also reduce the thermal noise in the camera such that a cleaner picture is obtained.

According to a further embodiment of the first aspect of the invention, the transversal electromagnetic waves are detected within a wavelength range of 280 nm to 400 nm.

Within the wavelength range of 280 nm to 400 nm the electromagnetic waves converted from the gauge wave of the quantum system will provide significant energy for detection. Furthermore, the wavelength range is suitable for detection using conventional detectors such as cameras and/or photo-detectors.

Another object of the present invention is to provide a detection system for performing the method of detecting quantum effects, in particular gauge waves, of a quantum system mounted in that detection system.

According to a second aspect of the present invention, the above objects and advantages are obtained by:
A detection system for detecting gauge waves of a quantum system, the system comprising:

- a detection unit, for detecting converted gauge waves,

- a vortex generator, for generating a magnetic vortex around a center point,

- a sample holder for receiving the quantum system and arranging the quantum system at a focus point, said focus point being in line with said detection unit and said center point.

By a sample holder is understood a container where the sample system can be mounted in such a way that the area of interest is facing the camera.

By a center point is understood the point where the two magnetic fields cancel each other out, and where the potential between the ring electrodes cancel out.

By a vortex generator is understood any known configuration of one or more devices which may provide a suitable magnetic vortex around the center point.

By a detection unit is understood device capable of recording electromagnetic waves, i.e. recording light.

In preferred variant of the invention, the detection unit is a camera. The camera may be a commercially available camera or video recording device. Similarly the camera may be one or more photo-detectors arranged as an array or be spatially distributed to detect signals form the quantum systems at various angles.

In a more preferred variant the detection unit is a camera capable of recording electromagnetic waves in at least part of the UV-spectrum such that the camera may detect one or more wavelengths falling within the range of 100 nm to 400 nm.

It is preferable that the detection unit is configured for operation at low temperatures such that it may be installed inside or close to a cooled environment such as a cryostat.

According to a further embodiment of the second aspect of the invention, the detection system comprises a cryostat for cooling the site of the focus point to 0.5 K or below.

According to a further embodiment of the second aspect of the invention, the vortex generator comprises:

- a first magnetic field generator, for applying a first magnetic field to the center point,

- a second magnetic field generator, for applying a second magnetic field to the center point,

- an electric pulse generator, for applying an electric pulse to the center point, the first magnetic field and the second magnetic field being of opposite direction along a magnetic axis, and the electric pulse generator being arranged to apply the electric pulse perpendicularly to the magnetic fields.

By a magnetic field generator is understood any known configuration of one or more devices which may provide a suitable magnetic field at the center point. The magnetic field generator may comprise one or more permanent magnets and/or one or more electromagnetic systems. In a preferred variant each of the magnetic field generators are arranged to be able to provide a magnetic field of at least 8 T at the center point.

By an electric pulse generator is understood any known configuration of one or more devices which may provide a suitable electric pulse gradient and field at the center point.

According to a further variant of the second aspect of the invention, the magnetic field generator comprising a first magnet and a second magnet, the first magnet and the second magnet being arranged to provide a first magnetic field and a second magnetic field at the site of the center point, the first magnetic field and the second magnetic field being of opposite direction.

By the first magnetic field and the second magnetic field being of opposite direction is understood that similar magnetic poles are aligned against each other, either north pole against north pole or south pole against south pole.

Such arrangement of the first magnet and the second magnet ensures that the first magnetic field and the second magnetic field are suitable for contributing to the creation of a magnetic vortex.

According to a further embodiment of the second aspect of the invention, the first magnetic field generator and the second magnetic field generator are substantially identical and are arranged substantially equidistantly with respect to the center point, the first magnet and the second magnet being parallelly arranged along a magnetic axis and the first magnetic field generator and the second magnetic field generator being arranged with oppositely directed poles.

According to a further embodiment of the second aspect of the invention, the electric pulse generator comprises a first ring-shaped electrode and a second ring-shaped electrode, the first ring shaped electrode and the second ring-shaped electrode being arranged to provide an electrical pulse and electrical field perpendicularly to the magnetic axis.

By a ring-shaped electrode is understood a ring made from a conducting material electrically connected to an electric pulse source, such that the electric pulse source may apply current to the ring-shaped electrodes. The first ring-shaped electrode and the second ring-shaped electrode may function as a capacitor arranged around the center point.

According to a further embodiment of the second aspect of the invention, the first ring-shaped electrode and the second ring-shaped electrode are concentrically arranged along the detection axis of the detection means.

Using ring-shaped electrodes has the benefit of enabling the placement of the camera along the central axis of the rings without the field of view being blocked by the electrode.

**References**

[1] Edward Nelson. Derivation of the schrödinger equation from newtonian mechanics. Phys. Rev., 150:1079-1085, Oct 1966.

[2] Spyros Efthimiades. Physical meaning and derivation of schrodinger and dirac equations, 2011.

[3] Artice M. Davis. A generalized Helmholtz theorem for time-varying vector fields. American Journal of Physics, 74(1):72-76, 01 2006.

[4] Knud Haugaard Sørensen. Quaternionic electrodynamics. Master's thesis, Steno Instituttet, Aarhus Universitet, October 2006.

[5] Milo Wolff. A wave structure for the electron. Galilean Electrodynamics, 6(5):83-91, 1995.

## BRIEF DESCRIPTION OF THE DRAWINGS

In the following, examples of embodiments are described according to the invention, where:

Figs. 1a and 1b schematically illustrate conversion and detection of quantum effects according to the invention.

Fig. 2 schematically illustrates a detection system for the conversion and detection of gauge waves according to the invention.

Figs. 3a-3b provides overviews of the variations of the method according to the present invention.

Overview of figure labels:

| | | | |
|---|---|---|---|
| 1 | Quantum system | 51 | First magnetic field generator |
| 5 | Focus point | 52 | Second magnetic field generator |
| 9 | Gauge waves | 53 | Magnetic axis |
| 10 | Detection system | 55 | Center point |
| 20 | Detection unit | 60 | Sample holder |
| 23 | Detection axis | 80 | Cryostat |
| 29 | EM waves | 100 | Provision step |
| 30 | Electric pulse generator | 110 | Generation step |
| 31 | First ring shaped electrode | 115 | Conversion step |
| 32 | Second ring-shaped electrode | 180 | Cooling step |
| 35 | Pulse source | 190 | Detection step |

(continued)

50       Magnetic vortex

## DETAILED DESCRIPTION OF THE DRAWINGS

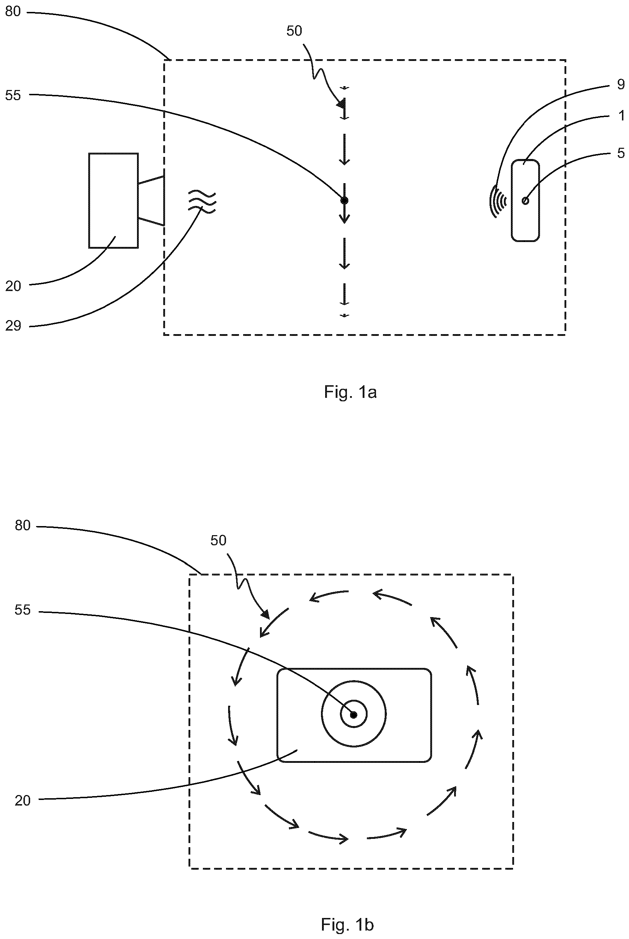

Figs. 1a and 1b schematically illustrate the detection of quantum effects according to the present invention. A quantum system 1 is arranged at a focus point 5 and a magnetic vortex 50 generated around a center point 55. The focus point 5 and the center point 55 are arranged such that the magnetic vortex 50 generates a non-zero gradient in the time component of the electric filed of the quantum system 1. The gauge waves 9 of the quantum system 1 are converted to electromagnetic waves 29 which may be detected by the detection unit 20 arranged to detect along a detection axis extending through both the center point 55 and the focus point 5.

The detection unit 20 will detect the electromagnetic waves 29 correlated with the gauge waves 9 of the quantum system 1 once they have been converted due to the presence of the non-zero gradient in the time component of the electric field induced by the magnetic vortex 50.

The detection unit 20 may be a camera, preferably a camera configured to detect electromagnetic light of the UV spectrum.

For some preferred embodiments, the quantum system 1 is cooled to a temperature of 0.5 K or below, this may be done by placing the quantum system 1 in a cryostat 80. In some preferred embodiments the detection system comprises such a cryostat 80 which may be arranged to contain multiple of the other components of the detection system such as a magnetic vortex generator. In some preferred embodiments the detection unit 20 may be arranged outside the cryostat 80 which may have a window through which the detection unit 20 may be arranged to record the gauge waves.

It is to be understood that for some embodiments all other components of the detection system may be arranged within the cryostat 80 while for other embodiments one or more components may be arranged outside the cryostat 80 for optimum functioning, e.g. a detection unit 20 or the pulse source of an electric pulse generator.

Fig. 1a shows a conceptual sketch of the arrangement of the quantum system 1 and detection unit 20 relative to the magnetic vortex 50 in a top view, while Fig. 1b shows the same concept in a view along the detection axis through the center point 55 perpendicular to the magnetic vortex 50.

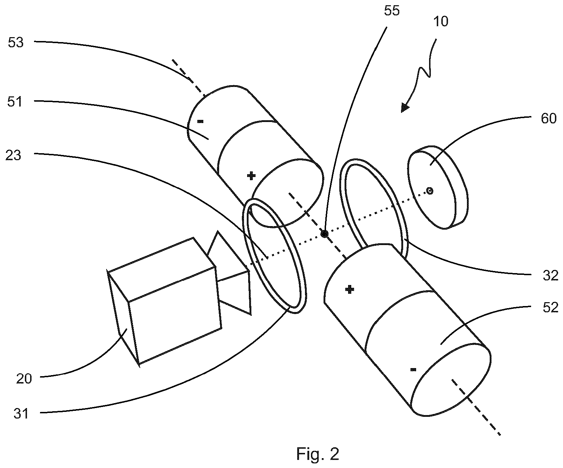

Fig. 2 shows an exemplary arrangement of a preferred embodiment of a detection system 10 according to the invention. The detection system 10 comprises a sample holder 60 configured to hold a quantum system to be investigated by the detection system 10, such that the quantum system will be arranged at the focus point (see Fig. 1).

A magnetic vortex may be created around the center point 55 by using two strong magnets with fields aligned against each other such that a magnetic field stress is created, and applying an electric pulse perpendicularly to the alignment of the magnet. This will set up a rotating magnetic field, i.e. the magnetic vortex, and with it a divergence in the electric time component, according to (6).

Hence, in the preferred embodiment a first magnetic field generator 51 and a second magnetic field generator 52 may be arranged in a parallel manner along a magnetic axis 53 arranged with their magnetic poles against each other. Hence, for a preferred embodiment as shown in Fig. 2 the first magnetic field generator 51 may be arranged with its positive magnetic pole closest to the center point 55 and the second magnetic field generator 52 simultaneously being arranged with its positive magnetic pole closest to the center point 55. In another equally preferable embodiment the first magnetic field generator 51 may be arranged with its negative magnetic pole closest to the center point 55 and the second magnetic field generator 52 simultaneously being arranged with its negative magnetic pole closest to the center point 55. In a preferred embodiment the first magnetic field generator 51 and the second magnetic field generator 52 are arranged equidistantly with respect to the center point 55. It will be understood by the person skilled in the art that any type of magnet, e.g. permanent magnets or electromagnets, may be used to provide the opposed magnetic fields for the creation of the magnetic vortex around the center point 55. While the preferred embodiment is as shown in Fig. 2 with the first magnetic field generator 51 and the second magnetic field generator 2 aligned along the magnetic axis 53, other embodiments may have the first 51 and/or second magnetic field generator 52 arranged off center, such that they are shifted relative to each other and/or angled with respect to the magnetic axis 53, while the detection system 10 is still suitable for inducing and detecting gauge waves. Hence, what is essential is that the first 51 and second magnetic field generator 52 are arranged to apply oppositely directed magnetic fields at the center point to generate the magnetic vortex. Embodiments having angled or shifted magnetic field generators 51,52 may be preferable due to physical constraints of the set-up or small variations may occur due to limited alignment precision and/or drift over time.

The preferred embodiment of the detection system 10 further comprises an electric pulse generator for applying an electric pulse rises from 0 V to a constant potential. In a preferred embodiment as shown in Fig. 2 the electric pulse generator may comprise a first ring-shaped electrode 31 and a second ring-shaped electrode 32 arranged on either side of the center point 55. The electric pulse generator may further comprise a pulse source electrically connected to both of the ring-shaped electrodes 31 and 32. The first ring shaped electrode 31 and the second ring-shaped electrode 32 are arranged such that the electric pulse is applied perpendicularly to the magnetic axis 52. In a preferred embodiment the detection unit 20, the first ring-shaped electrode 31, the second ring-shaped electrode 32, the center point 55 and the focus point 5 defined by the positioning of the sample holder 60 are arranged in line along a detection axis 23, where the detection axis 23 and the magnetic axis 53 are perpendicular crossing each other in the center point 55. Thereby, the magnetic vortex and the quantum system may be suitably arranged for the conversion of gauge waves into electromagnetic waves while the detection unit may detect these electromagnetic waves of the quantum system held by the sample holder 60 without the line of sight of the detection unit being blocked by any other component of the detection system 10.

In some example variants the control of the applied electric pulse rising from 0 V to a constant potential may be carried out by using a transistor or a relay. Various constant potentials may be suitable for the detection of quantum systems in accordance with the invention. One non-limiting example is that the electric pulse may rise from 0 V to a constant potential in the range of 5V to 50V, such as a potential in the range of 10 V to 20 V.

While not shown in Fig. 2, the detection system may in some preferred embodiments further comprise a cryostat for cooling the quantum system.

In other embodiments, the detection system may comprise multiple detection units 20 arranged at various positions relative to the quantum system enabling detection of the electromagnetic waves and their propagation towards different points in space.

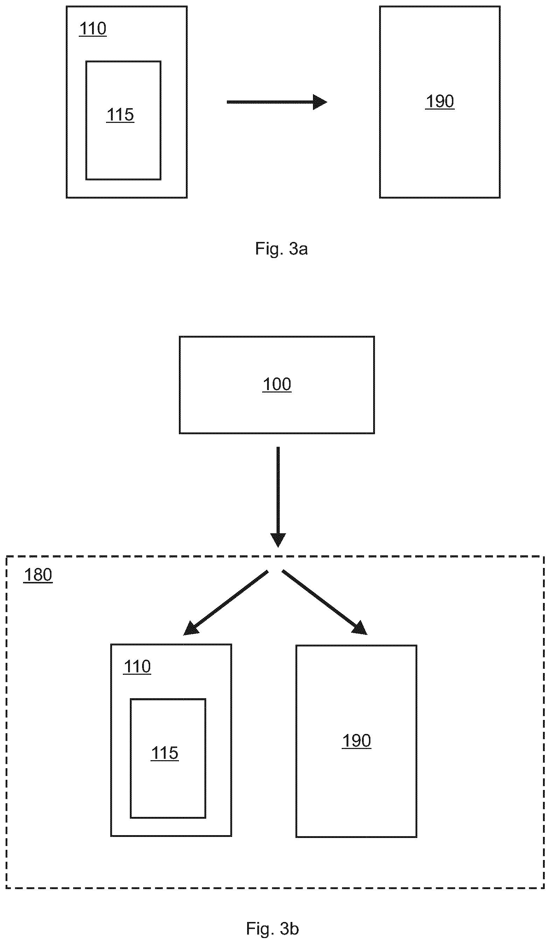

Figs. 3a and 3b schematically illustrate the method according to the invention. In a preferred embodiment as shown in the flowchart, the first generation step 110 is to generate a non-zero gradient in the time component of the electric field. This generation step 110 causes the conversion 115 of gauge wave into electromagnetic waves. As previously described the generation step may comprise the creation of a magnetic vortex, which will in turn generate the non-zero gradient in the time component. During the detection step 190, a detection unit collects the electromagnetic waves, i.e. the converted gauge wave, whereby the quantum effects of the monitored quantum system may be observed.

It will be understood to the person skilled in the art that processing steps may follow the detection to process the collected data.

In some preferred embodiments the optional cooling step 180 may be included, wherein the quantum system and optionally the entirety of the detection system is cooled. This may be carried out by placement of the quantum system in a cryostat. In a preferred embodiment the cooling is to a temperature of 0.5 K or below.

It is understood that the cooling step may be seen as preceding and/or encompassing the other steps as cooling may be continuous during the performance of the further steps of the method. Similarly, while the detection step 190 is illustrated as occurring at the end it may similarly be carried out continuously throughout the process. For example in some embodiments the detection unit may be activated before the generation step 110 is carried out to detect the initially generated electromagnetic signal. Similarly to facilitate continued conversion 115 the generated magnetic vortex may be maintained through the detection allowing real-time continued monitoring of the quantum effects. Fig. 3b illustrates one such concurrent variant of the method, including the implicit provision step 100 of providing a quantum system from which the quantum effects are to be examined, the generation step 110 and the detection step 190 are then carried out simultaneously and continuously. Optionally the cooling step 180 may also be present for continuous cooling of the quantum system during conversion 115 and detection 190.

It is to be understood that the following claims are intended to cover all of the generic and specific features of the invention herein described and all statements of the scope of the invention which, as a matter of language, might be said to fall there between.

## Claims

1. A method for detecting gauge waves from a quantum system, said method comprising:

    - generating a non-zero gradient in the time-component of the electric field, such that gauge waves are converted to electromagnetic waves,
    - detecting transversal electromagnetic waves originating from the conversion.

2. The method according to claim 1, said non-zero gradient in the time component being generated by a magnetic vortex.

3. The method according to claim 2, said magnetic vortex being created by subjecting a center point to a first magnetic field and a second magnetic field, said first magnetic field and said second magnetic field being aligned in opposite directions, and applying an electric pulse perpendicularly to said magnetic fields.

4. The method according to claim 3, said first magnetic field and said second magnetic field being of the same magnitude.

5. The method according to any of the claims 3-4, said first magnetic field and said second magnetic field each providing a magnetic field strength of at least 8 T at the site of said center point.

6. The method according to any of the claims 3-5, said electric pulse rising from 0 V to a constant potential.

7. The method according to any of the previous claims, cooling said quantum system to a temperature of 0.5 K or below.

8. The method according to any of the previous claims, said detection of transversal electromagnetic waves comprising detection of waves having a wavelength within the range of 280 nm to 400 nm.

9. A detection system for detecting gauge waves of a quantum system, said detection system comprising:

   - a detection unit, for detecting converted gauge waves
   - a vortex generator, for generating a magnetic vortex around a center point,
   - a sample holder for receiving said quantum system and for arranging said quantum system at a focus point in line with said detection unit and said center point.

10. The detection system according to claim 9, said detection system comprising a cryostat for cooling the site of said focus point, preferably to a temperature of 0.5 K or below.

11. The detection system according to any of the claims 9-10, said vortex generator comprising:

   - a first magnetic field generator, for applying a first magnetic field to said center point,
   - a second magnetic field generator, for applying a second magnetic field to said center point,
   - an electric pulse generator, for applying an electric pulse to said center point, said first magnetic field and said second magnetic field being of opposite direction along a magnetic axis, and said electric pulse generator being arranged to apply said electric pulse perpendicularly to said magnetic fields.

12. The detection system according to any of the claims 11, said first magnetic field generator and said second magnetic field generator being substantially identical and being arranged substantially equidistantly with respect to said center point, said first magnetic field generator and said second magnetic field generator being parallelly arranged along a magnetic axis and said first magnetic field generator and said second magnetic field generator being arranged with oppositely directed poles.

13. The detection system according to any of the claims 9-12, said electric pulse generator comprising a first ring-shaped electrode and a second ring-shaped electrode, said first ring-shaped electrode and said second ring-shaped electrode being arranged to provide an electrical pulse and electrical field perpendicularly to the magnetic axis.

14. The detection system according to claim 13, said first ring-shaped electrode and said second ring-shaped electrode being concentrically arranged along the detection axis of said detection means.

Fig. 1a

Fig. 1b

Fig. 2

Fig. 3a

Fig. 3b

**EUROPEAN SEARCH REPORT**

Application Number

EP 24 21 9948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MINOTTI F ET AL: "Gauge waves generation and detection in Aharonov-Bohm electrodynamics", ARXIV.ORG, CORNELL UNIVERSITY LIBRARY, 201 OLIN LIBRARY CORNELL UNIVERSITY ITHACA, NY 14853, 21 October 2023 (2023-10-21), XP091641265, * abstract * * Section I C, I E, I F, III A, IV * ----- | 1-14 | INV. G01R29/08 |
| X | MINOTTI F ET AL: "Simple circuit and experimental proposal for the detection of gauge-waves", ARXIV.ORG, CORNELL UNIVERSITY LIBRARY, 201 OLIN LIBRARY CORNELL UNIVERSITY ITHACA, NY 14853, 15 March 2024 (2024-03-15), XP091702147, * abstract * * Section Indtroduction, I A, I B, I C * ----- | 1-14 | |

TECHNICAL FIELDS
SEARCHED (IPC)

H04L
G01R

The present search report has been drawn up for all claims

| Place of search | Date of completion of the search | Examiner |
|---|---|---|
| Munich | 20 May 2025 | Kopp, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EDWARD NELSON**. Derivation of the schrödinger equation from newtonian mechanics. *Phys. Rev.*, October 1966, vol. 150, 1079-1085
- Physical meaning and derivation of schrodinger and dirac equations. *Spyros Efthimiades*, 2011
- **ARTICE M. DAVIS**. A generalized Helmholtz theorem for time-varying vector fields. *American Journal of Physics*, January 2006, vol. 74 (1), 72-76
- Quaternionic electrodynamics. **KNUD HAUGAARD SØRENSEN**. Master's thesis. Aarhus Universitet, October 2006
- **MILO WOLFF**. A wave structure for the electron. *Galilean Electrodynamics*, 1995, vol. 6 (5), 83-91